# EUROPÄISCHE PATENTSCHRIFT

(11) **EP 2 686 093 B1**
(45) Veröffentlichungstag und Bekanntmachung des Hinweises auf die Patenterteilung: **10.08.2016**
(21) Anmeldenummer: 12709600.6
(22) Anmeldetag: 13.03.2012
(51) Int. Cl.: B01F 9/08, B01J 2/10, B01J 2/12, B01F 7/00

(54) **VERFAHREN ZUM GRANULIEREN ODER AGGLOMERIEREN**
METHOD FOR GRANULATING OR AGGLOMERATING
PROCÉDÉ DE GRANULATION OU D'AGGLOMÉRATION

(30) Priorität: 14.03.2011 DE 102011005519
(43) Veröffentlichungstag der Anmeldung: 22.01.2014
(73) Patentinhaber: Maschinenfabrik Gustav Eirich GmbH & Co. KG, 70736 Hardheim (DE)
(72) Erfinder: GERL, Stefan, 97956 Werbach (DE); KLEIN, Christina, 74736 Hardheim (DE)
(74) Vertreter: WSL Patentanwälte Partnerschaft mbB
(86) Internationale Anmeldenummer: PCT/EP2012/054351
(87) Internationale Veröffentlichungsnummer: WO 2012/123441

(56) Entgegenhaltungen:
- DE-A1- 2 511 381
- DE-A1-102007 021 056
- US-A- 3 351 434
- US-A- 5 620 251

## Beschreibung

Die vorliegende Erfindung betrifft ein Verfahren zum Granulieren oder Agglomerieren.

Aus der Verfahrenstechnik ist das Granulieren und das Agglomerieren bekannt. Beim Granulieren wird aus einem oder mehreren Bestandteilen ein Granulat, d.h. ein körniger und leicht schüttbarer Feststoff hergestellt. Beim Agglomerieren wird der Partikelgrößenbereich zu größeren Größen verschoben und stellt damit das Gegenteil zum Zerkleinern dar.

Es ist bekannt, zum Granulieren oder Agglomerieren die entsprechenden Bestandteile und eventuell Zuschlagsstoffe in einen Mischer zu füllen und mit Hilfe eines Rührwerkzeuges durchzumischen.

Hierfür verwendete Rührwerkzeuge weisen häufig mehrere an einer zentralen Welle montierte, sich radial nach außen erstreckende Arme auf, die an ihrem radial äußeren Ende nach oben oder unten abgewinkelt sind.

Es hat sich jedoch gezeigt, dass die Rührdauer, die mit diesen Werkzeugen und diesen Vorrichtungen notwendig ist, um eine gewünschte Granulation oder Agglomerierung zu erhalten, recht lang ist. Zudem ist es mit den bekannten Werkzeugen nur möglich, Granulate mit einer Granulatgrößenverteilung im Bereich von 0,1 - 2,0 mm oder größer zu erzielen. Die Ausbeute an Granulaten im Bereich kleiner als 1,0 mm ist mit 30-60% relativ gering. Aus diesem Grunde sind für kleine Granulate im Größenbereich 0,1 bis 0,8 mm vorzugsweise Sprühgranulatoren im Einsatz, die eine nahezu 100%-ige Ausbeute erzielen.

Ausgehend von dem beschriebenen Stand der Technik ist es daher Aufgabe der vorliegenden Erfindung ein Verfahren zum Granulieren oder Agglomerieren bereitzustellen, bei dem das gewünschte Granulier- oder Agglomerierergebnis sehr viel schneller und vor allem auch ein deutlich feineres Granulat mit einer deutlich höheren Ausbeute im Bereich von 0,1 bis 0,8 mm erzielt werden kann.

Erfindungsgemäß wird diese Aufgabe durch ein Verfahren gemäß Anspruch 1

Es hat sich überraschenderweise gezeigt, dass insbesondere beim Granulieren, jedoch auch beim Agglomerieren die Verwendung eines solchen Werkzeuges zu deutlich besseren Ergebnissen führt.

Da die vorliegende Erfindung im Wesentlichen für das Granulieren entwickelt wurde, wird im Folgenden die Erfindung lediglich anhand des Granulierens beschrieben. Es hat sich jedoch gezeigt, dass Vorteile auch beim Agglomerieren erzielt werden, so dass ausdrücklich darauf hingewiesen wird, dass das Werkzeug und das Verfahren auch für das Agglomerieren verwendet werden können.

In einer besonders bevorzugten Ausführungsform weisen die Nuten einen Nuttiefe t auf, wobei t zwischen dem 0,05 und 0,4-fachen, vorzugsweise zwischen dem 0,1 und 0,3-fachen und am Besten zwischen dem 0,15 und 0,25-fachen des Durchmessers d des scheibenförmigen Elements beträgt. Die Nuten dürfen einerseits nicht zu tief sein, um eine ausreichende Bewegung des zu granulierenden Materials in radialer Richtung nach außen entlang der oberen und unteren Fläche des scheibenförmigen Elementes zu gewährleisten, und sollten andererseits nicht zu gering sein, da der gewünschte Granuliereffekt im Wesentlichen innerhalb der Nuten erfolgt bzw. an den Kanten, die von der Ober- oder Unterfläche und den Nutwänden gebildet werden. Die Nuten verlaufen somit von der oberen Fläche bis zur unteren Fläche des scheibenförmigen Elementes.

Daher sollten die von den Nutwänden und der oberen oder unteren Fläche des scheibenförmigen Elementes ausgebildeten Kanten möglichst scharfkantig ausgeführt sein, d.h. der Eckenradius sollte kleiner als 1 mm sein.

In einer weiteren besonders bevorzugten Ausführungsform besteht zumindest eine Nutwand zumindest abschnittsweise aus einem härteren Material als das scheibenförmige Element. Wie bereits ausgeführt, wird der gewünschte Granuliereffekt zu einem Großteil durch die Nuten bewirkt, was zu einem erhöhten Verschleiß der Nutenwände und insbesondere der von den Nutenwänden und der oberen und unteren Oberfläche des scheibenförmigen Elements gebildeten Kanten führen kann. Daher ist vorgesehen, dass die Nutwand zumindest abschnittsweise, am besten in einem Abschnitt, der sich an die Umfangsfläche anschließt, aus einem härteren Material besteht.

So kann das scheibenförmige Element beispielsweise mit einem Hartmetall, einer Keramik oder einem gehärteten Stahlelement bestückt werden.

Alternativ oder in Kombination hierzu weist die Nutwand des scheibenförmigen Elementes eine Ausnehmung auf, in die ein Verschleißelement, vorzugsweise aus dem härteren Material, eingesetzt ist. Die in die Ausnehmung eingesetzten Elemente können fest oder lösbar mit dem scheibenförmigen Element verbunden werden. Sind die Verschleißelemente verschlissen, können sie einfach ausgetauscht werden.

Alternativ kann der gesamte, die Nuten umfassende radial äußere Bereich der scheibenförmigen Elemente aus einem härteren Material bestehen.

Es hat sich weiterhin gezeigt, dass der Granuliereffekt noch weiter verstärkt werden kann, wenn das härtere Material oder das Verschleißelement über die obere Fläche und/oder die untere Fläche und/oder die Umfangsfläche um den Abstand a vorsteht, da dann der Granuliereffekt ausschließlich von dem Abschnitt aus härterem Material bewirkt wird. Dabei sollte der Abstand a kleiner als die Dicke e des scheibenförmigen Elementes sein.

Für manche Anwendungsfälle kann es zudem von Vorteil sein, wenn die Nutwand zumindest zwei voneinander getrennte Abschnitte aus einem härteren Material als das scheibenförmige Element oder zwei eingesetzte Verschleißelemente aufweist, wobei am besten bei beiden Abschnitten das härtere Material bzw. die Verschleißelemente über die obere Fläche und/oder die untere Fläche vorstehen.

Weiterhin hat sich gezeigt, dass der Granuliereffekt verbessert werden kann, wenn die obere Fläche in einem kreisringförmigen Abschnitt, der sich von der Umfangsfläche um die Nuttiefe t in Richtung des Schaftes erstreckt, kein Element aufweist, das axial nach oben über die Nutwände oder über ein an oder in den Nutwänden befestigtes Element aus härterem Material vorsteht. Untersuchungen mit unterschiedlichen Werkzeuggeometrien haben gezeigt, dass nicht unmittelbar an die Nutwände anschließende, axial nach oben stehende Erhebungen auf der Oberseite des scheibenförmigen Elementes zu einem schlechteren Kontakt des Granulates mit der Scheibenoberfläche führen, die den Granuliereffekt wesentlich verschlechtern.

Am besten steht zumindest auf der oberen Fläche des scheibenförmigen Element in einem kreisringförmigen Abschnitt, der sich von der Umfangsfläche um den 0,35-fachen, oder besser noch um den 0,45-fachen Durchmesser des scheibenförmigen Elements in Richtung des Schaftes erstreckt, kein Element - außer dem eventuell vorhandenen härteren Material - über die obere Fläche des scheibenförmigen Elementes vor. Im Idealfall steht lediglich der Befestigungsschaft über die obere Fläche des scheibenförmigen Element vor. Die obere Fläche des scheibenförmigen Elementes ist vorzugsweise ungestört und möglichst eben und glatt.

Da in der Regel das erfindungsgemäße Werkzeug nicht direkt über einem Behälterboden montiert werden kann, kann es für manche Anwendungsfälle zweckmäßig sein, wenn die untere Fläche mindestens ein und vorzugsweise mindestens zwei Aufwirbelelemente aufweist, die über die untere Fläche in axialer Richtung vorstehen, wobei die Aufwirbelelemente vorzugsweise in Umfangsrichtung gleiche Winkelabstände haben.

So könnte beispielsweise an jedem zwischen zwei benachbarten Nuten sich ausbildenden Steg des scheibenförmigen Elementes ein Aufwirbelelement befestigt sein. Alternativ wäre es auch möglich, nur an jedem zweiten, dritten oder vierten Steg entsprechende Aufwirbelelemente zu befestigen.

In einer weiteren besonders bevorzugten Ausführungsform ist vorgesehen, dass die Nuten in Umfangsrichtung äquidistant zueinander angeordnet sind.

Es hat sich gezeigt, dass mit Vorteil das Verhältnis der Nutbreite zu dem Abstand der Nuten in Umfangsrichtung größer als 0,05, vorzugsweise zwischen 0,1 und 5 und am besten zwischen 0,3 und 2 beträgt.

Für manche Anwendungsfälle kann es vorteilhaft sein, wenn das Werkzeug zwei scheibenförmige Elemente aufweist, die in Axialrichtung voneinander beabstandet an dem Befestigungsschaft angeordnet sind. Selbstverständlich können auch mehr als zwei scheibenförmige Elemente vorgesehen sein.

Grundsätzlich kann das erfindungsgemäße Werkzeug in jedem Behälter verwendet werden. Die Behälterachse kann beispielsweise vertikal, horizontal oder gegenüber der vertikalen geneigt angeordnet sein. So wurden gute Granuliereigenschaften bei vertikalen Behältern, in denen das Werkzeug ortsfest konzentrisch um seine eigene Achse rotiert oder exzentrisch zur Behältermitte um das Zentrum des Mischers und um seine eigene Achse rotiert, beobachtet.

Das erfindungsgemäße Werkzeug wird jedoch am besten verwendet in einer Granulier- und/oder Agglomeriervorrichtung mit einem drehbaren Behälter, wobei das erfindungsgemäße Granulier- und/oder Agglomerierwerkzeug in dem drehbaren Behälter angeordnet ist und am besten sich das Werkzeug nicht mit dem Behälter dreht. Mit anderen Worten dreht sich der Behälter während der Befestigungsschaft des Granulierwerkzeugs im wesentlichen ortsfest verbleibt. Das Granulierwerkzeug kann sich jedoch um die Schaftachse drehen.

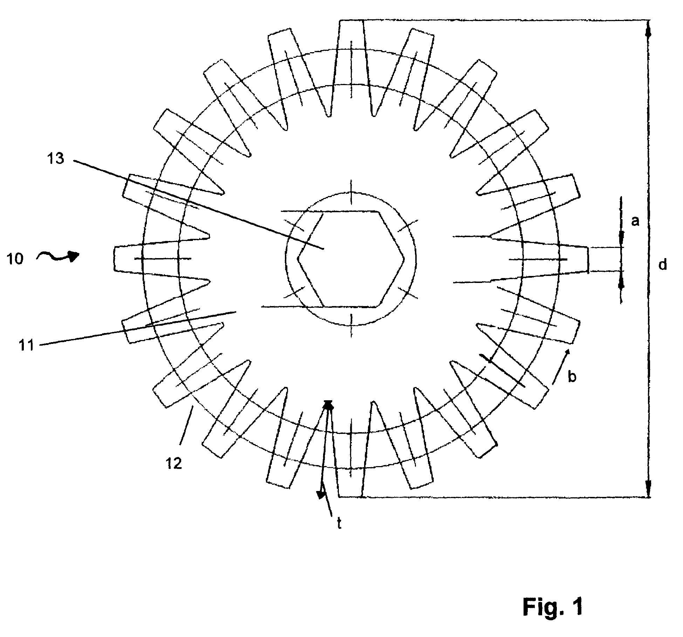

In Figur 1 ist eine erste Ausführungsform der Erfindung in einer Draufsicht gezeigt. Das Werkzeug 10 besteht aus einem scheibenförmigen Element 11, welches zentral eine Öffnung 13 aufweist, mit der das scheibenförmige Element 11 an einem Befestigungsschaft (nicht gezeigt) angebracht werden kann.

Das scheibenförmige Element 11 hat eine obere Fläche, auf die man in Figur 1 blickt, eine untere Fläche, die in die Papierebene hineinzeigt und eine Umfangsfläche, die die obere Fläche und die Dabei ist vorzugsweise die Behälterdrehachse und die Schaftachse parallel zueinander angeordnet, wobei am besten die Behälterdrehachse und die Schaftachse voneinander beabstandet sind.

Weiterhin ist es von Vorteil, wenn die Behälterdrehachse gegenüber der Vertikalen leicht geneigt ist. Hier haben sich Neigungswinkel zwischen 5° und 30° als besonders bevorzugt erwiesen.

Weitere Vorteile, Merkmale und Anwendungsmöglichkeiten werden deutlich anhand der vorliegenden Beschreibung bevorzugter Ausführungsformen. Es zeigen:
Figur 1 eine erste Ausführungsform eines erfindungsgemäß zu verwendenden Granulierwerkzeuges,
Figur 2 eine zweite Ausführungsform eines erfindungsgemäß zu verwendenden Granulierwerkzeuges,
Figur 3 eine dritte Ausführungsform eines erfindungsgemäß zu verwendendenGranulierwerkzeuges,
Figur 4 eine vierte Ausführungsform eines erfindungsgemäß zu verwendenden Granulierwerkzeuges,
Figur 5 eine fünfte Ausführungsform eines erfindungsgemäß zu verwendenden Granulierwerkzeuges,
Figur 6 eine sechste Ausführungsform eines erfindungsgemäß zu verwendenden Granulierwerkzeuges,
Figur 7 eine siebte Ausführungsform eineserfindungsgemäß zu verwendenden Granulierwerkzeuges,
Figur 8 eine achte Ausführungsform eines erfindungsgemäß zu verwendenden Granulierwerkzeuges,
Figur 9 eine neunte Ausführungsform eineserfindungsgemäß zu verwendenden Granulierwerkzeuges,
Figur 10 eine zehnte Ausführungsform eineserfindungsgemäß zu verwendenden Granulierwerkzeuges,
Figur 11 eine elfte Ausführungsform eines erfindungsgemäß zu verwendenden Granulierwerkzeuges,
Figur 12 eine zwölfte Ausführungsform eines erfindungsgemäß zu verwendenden Granulierwerkzeuges,
Figur 13 eine dreizehnte Ausführungsform eines erfindungsgemäß zu verwendenden Granulierwerkzeuges, und
Figuren 14 bis 16 eine vierzehnte Ausführungsform der Erfindung.
untere Fläche verbindet. Die Umfangsfläche weist eine Vielzahl von V-förmigen Nuten 12 mit einer Nuttiefe t auf.

Die Nut hat eine Breite b und der Abstand von Nut zu Nut beträgt a. Das scheibenförmige Element 11 hat einen Durchmesser d. Die Nutwände sind scharfkantig ausgeführt, d.h., dass die Übergangsbereiche zwischen oberer und unterer Fläche und den Nutwänden nicht gefast sind, sondern einen sehr kleinen Krümmungsradius aufweisen. Benachbarte Nuten sind in Umfangsrichtung jeweils um 18° voneinander beabstandet.

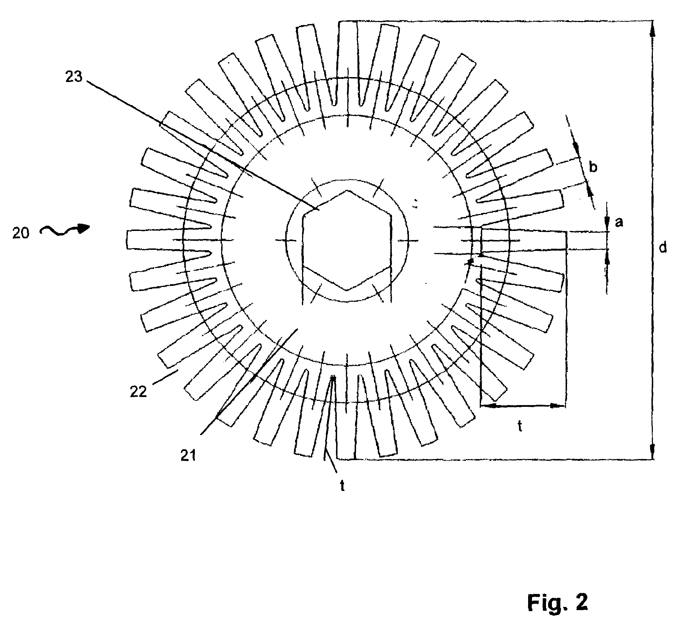

In Figur 2 ist eine zweite Ausführungsform der Erfindung gezeigt, das Werkzeug 20 weist ebenfalls eine Ausnehmung 23 auf, die der Befestigung des Werkzeugs am Befestigungsschaft dient. Die zweite Ausführungsform unterscheidet sich von der ersten Ausführungsform im wesentlichen dadurch, dass deutlich mehr Nuten 22 vorgesehen sind. Daher sind die Nuten in Umfangsrichtung um einen Winkel von 11,25° voneinander beabstandet.

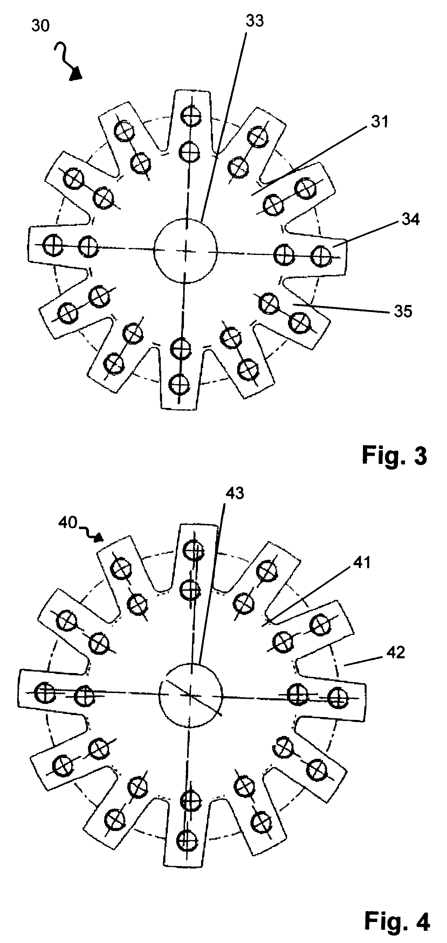

In Figur 3 ist eine dritte Ausführungsform der Erfindung gezeigt. Das Werkzeug 30 besteht aus einem scheibenförmigen Element. Auch hier ist eine zentrale Öffnung 33 für die Befestigung am Befestigungsschaft (nicht gezeigt) vorgesehen.

Bei dieser Ausführungsform sind zusätzlich zwei Gewindebohrungskreise 34 und 35 vorgesehen, an denen an der unteren Fläche des Werkzeugs 30 ein oder mehrere Aufwirbelelemente befestigt werden können.

In Figur 4 ist eine vierte Ausführungsform der Erfindung gezeigt, bei der die Nuten 42 im Querschnitt nicht symmetrisch ausgebildet sind. Zudem weist der Nutgrund ein Plateau auf.

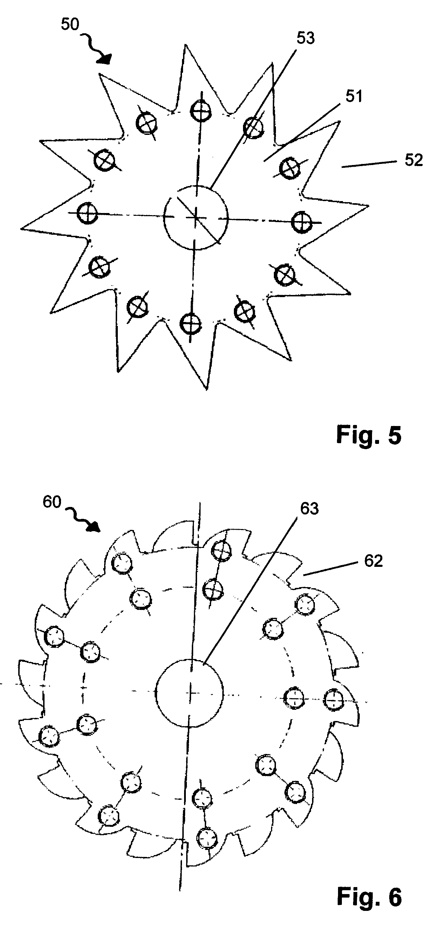

In Figur 5 ist eine fünfte Ausführungsform der Erfindung gezeigt, bei der die Nutbreite derart groß ist, dass der Abstand zwischen zwei benachbarten Nuten minimal wird.

Bei der in Figur 6 gezeigten Ausführungsform des Werkzeuges 60 weist die Nut 62 eine im wesentlichen ebene Nutwand sowie eine konvex gekrümmte Nutwand auf.

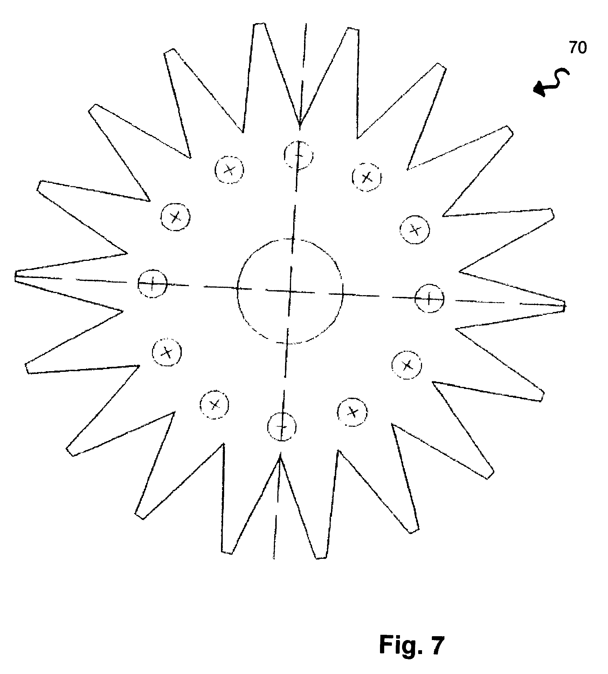

In Figur 7 ist eine siebte Ausführungsform eines erfindungsgemäßen Werkzeuges 70 gezeigt.

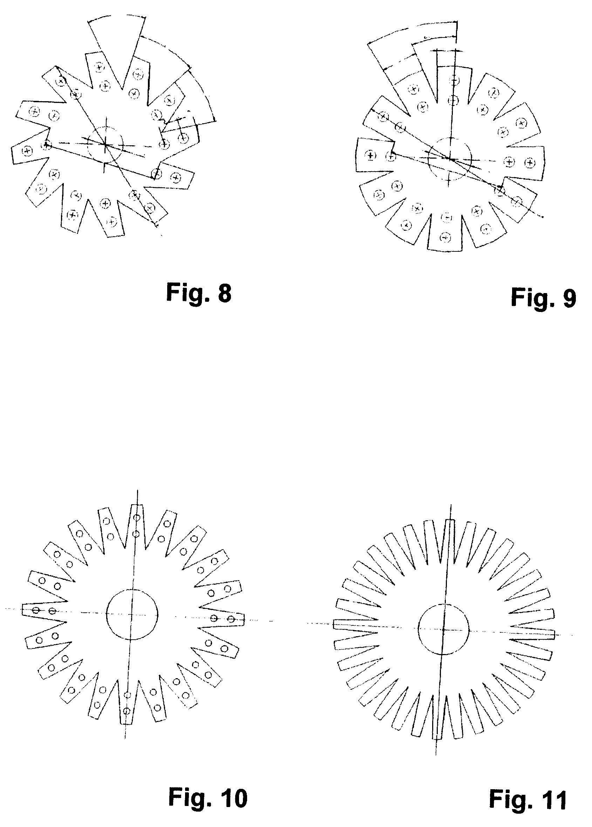

In den Figuren 8 bis 11 sind eine achte bis elfte Ausführungsform der Erfindung gezeigt. Die Ausführungsformen unterscheiden sich durch unterschiedliche Nutgeometrien sowie unterschiedliche Nutbreiten und -tiefen.

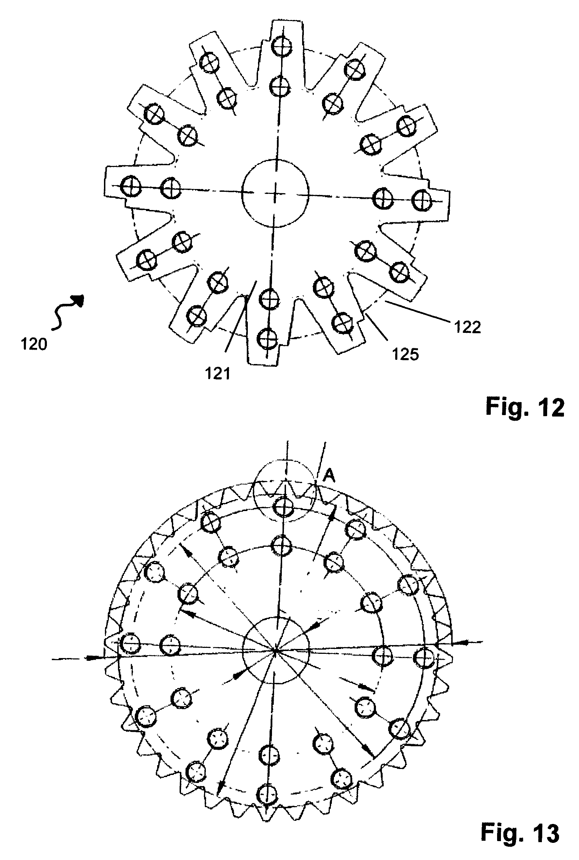

In Figur 12 ist eine weitere bevorzugte Ausführungsform gezeigt. Das Werkzeug 120 weist ein scheibenförmiges Element 121 mit einer Vielzahl von Nuten 122 auf. Jede Nut 122 weist an einer Nutwand eine Ausnehmung 125 auf, die für die Aufnahme eines Materials, das vorzugsweise härter ist als das Material des scheibenförmigen Elementes 121, vorgesehen ist. Beispielsweise kann hier Hartmetall eingefügt werden.

Das eingesetzte Hartmetall kann sowohl über die obere Fläche als auch über die untere Fläche in axialer Richtung sowie über die Umfangsfläche vorstehen.

In Figur 13 ist eine dreizehnte Ausführungsform der Erfindung gezeigt, bei der die Nuttiefe sehr gering ausgebildet ist.

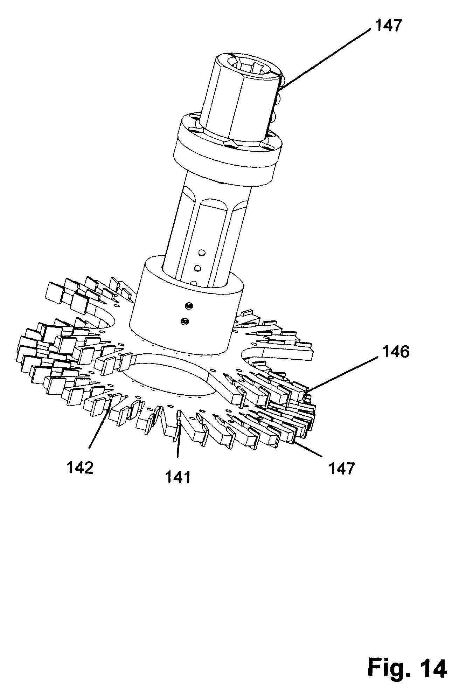

In den Figuren 14 bis 16 ist eine vierzehnte Ausführungsform der Erfindung gezeigt. Figur 14 zeigt eine perspektivische Ansicht des Werkzeuges 140. Das Werkzeug 140 weist zwei scheibenförmige Elemente 141 und 146 auf, die beide an dem Befestigungsschaft 147 angeordnet sind. Sie sind in axialer Richtung voneinander beabstandet. Beide scheibenförmigen Elemente 141, 146 weisen Nuten 142 auf. Jeweils eine Nutwand jeder Nut 142 weist zwei Abschnitte aus einem härteren Material, z.B. Hartmetall auf. Diese Hartmetallplättchen 147 stehen in axialer und radialer Richtung über die obere, die untere und die Umfangsfläche des scheibenförmigen Elementes vor. Zudem weist das obere scheibenförmige Element 146 vier U-förmige Ausnehmungen 148 auf, durch die das zu granulierende Material bis zum unteren scheibenförmigen Element 141 strömen kann.

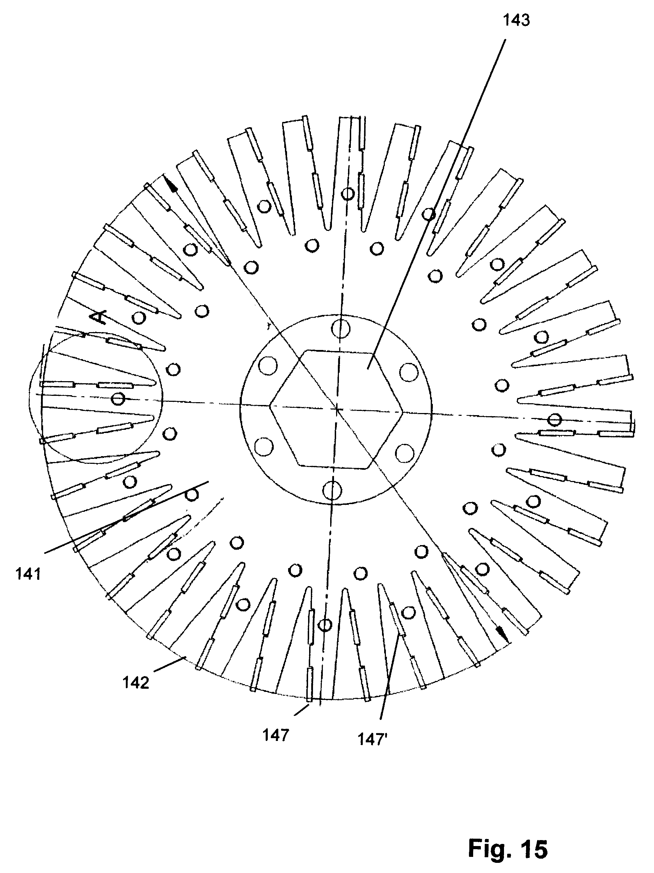

In Figur 15 ist eine Draufsicht des unteren scheibenförmigen Elementes 141 dargestellt. Man erkennt, dass die Hartmetallstücke 147 und 147' in entsprechenden Ausnehmungen in der Nutwand angeordnet sind.

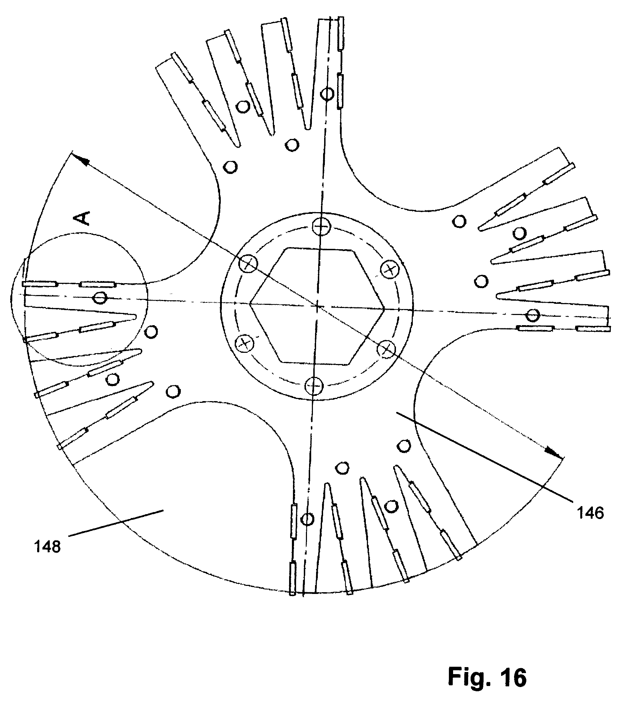

Das in Figur 16 dargestellte obere scheibenförmige Element 146 weist entsprechende U-förmige Ausnehmungen 148 auf, durch die das Material von oben durch die Ausnehmung 148 zu dem unteren scheibenförmigen Element 141 strömen kann.

## Patentansprüche

1. Verfahren zum Granulieren oder Agglomerieren, bei dem die zu granulierenden oder zu agglomerierenden Bestandteile in einen Behälter eingefüllt werden und mit einem Werkzeug vermischt werden, **dadurch gekennzeichnet, dass** eine Granulier- und/oder Agglomeriervorrichtung mit einem Behälter und einem in dem Behälter angeordneten Granulier- und/oder Agglomerierwerkzeug verwendet wird, wobei das Granulier- und/oder Agglomerierwerkzeug einen Befestigungsschaft und ein an diesem befestigtes, in etwa scheibenförmiges Element mit einem Durchmesser d, mit einer oberen Fläche, einer unteren Fläche und einer die obere und die untere Fläche verbindende Umfangsfläche hat, wobei die Umfangsfläche eine Mehrzahl von parallel zur Schaftachse verlaufend im wesentlichen V-förmige Nuten aufweist.

2. Verfahren nach Anspruch 1, **dadurch gekennzeichnet, dass** die Nuten eine Nuttiefe t aufweisen, wobei t zwischen dem 0,05 und 0,4 -fachen, vorzugsweise zwischen dem 0,1 und 0,3 fachen und am besten zwischen dem 0,15 und 0,25-fachen des Durchmessers d beträgt.

3. Verfahren nach Anspruch 1 oder 2, **dadurch gekennzeichnet, dass** zumindest eine Nutwand zumindest abschnittsweise aus einem härteren Material als das scheibenförmige Element hergestellt ist.

4. Verfahren nach einem der Ansprüche 1 bis 3, **dadurch gekennzeichnet, dass** in der Nutwand des scheibenförmigen Element eine Ausnehmung vorgesehen ist, in die ein Verschleißelement eingesetzt ist, wobei vorzugsweise das Verschleißelement aus einem härteren Material besteht als das scheibenförmige Element.

5. Verfahren nach Anspruch 4, **dadurch gekennzeichnet, dass** das Verschleißelement über die obere Fläche und/oder die untere Fläche und/oder die Umfangsfläche um einen Abstand a vorsteht, wobei vorzugsweise der Abstand a kleiner als die Dicke e des scheibenförmigen Elements ist, wobei der Abstand a mit dem das Verschleißelement über die obere Fläche gleich oder ungleich dem Abstand a mit dem das Verschleißelement über die untere Fläche und gleich oder ungleich dem Abstand a mit dem das Verschleißelement über die Umfangsfläche vorsteht ist.

6. Verfahren nach Anspruch 5, **dadurch gekennzeichnet, dass** zumindest eine Nutwand zumindest zwei voneinander getrennte Ausnehmungen aufweist, in die jeweils ein Verschleißelement eingesetzt ist, wobei vorzugsweise bei beiden Abschnitten das Verschleißmaterial über die obere Fläche und/oder die untere Fläche vorsteht.

7. Verfahren nach einem der Ansprüche 1 bis 6, **dadurch gekennzeichnet, dass** die obere Fläche in einem kreisringförmigen Abschnitt, der sich von der Umfangsfläche um mindestens die Nuttiefe t in Richtung des Schaftes erstreckt, kein sich axial über die Nutwände oder einem an oder in den Nutwänden befestigten Verschleißelement erstreckendes Element aufweist.

8. Verfahren nach einem der Ansprüche 1 bis 7, **dadurch gekennzeichnet, dass** die untere Fläche mindestens ein und vorzugsweise mindestens zwei Aufwirbelelemente aufweist, die über die untere Fläche in axialer Richtung vorstehen, wobei die Aufwirbelelemente vorzugsweise in Umfangsrichtung gleiche Winkelabstände haben.

9. Verfahren nach einem der Ansprüche 1 bis 8, **dadurch gekennzeichnet, dass** die Nuten in Umfangsrichtung äquidistant zueinander angeordnet sind, wobei vorzugsweise das Verhältnis der Nutbreite zu dem Abstand der Nuten in Umfangsrichtung größer als 0,05, vorzugsweise zwischen 0,1 und 5 und am besten zwischen 0,3 und 2 ist.

10. Verfahren nach einem der Ansprüche 1 bis 9, **dadurch gekennzeichnet, dass** mindestens zwei scheibenförmige Elemente vorgesehen sind, die in Axialrichtung voneinander beabstandet sind.

11. Verfahren nach einem der Ansprüche 1 bis 10, **dadurch gekennzeichnet, dass** Behälterdrehachse und Schaftachse parallel zueinander angeordnet sind, wobei vorzugsweise die Behälterdrehachse und die Schaftachse voneinander beabstandet sind.

12. Verfahren nach Anspruch 11, **dadurch gekennzeichnet, dass** der Behälter drehbar ist, wobei vorzugsweise die Schaftachse des Granulier- und/oder Agglomerierwerkzeug ortsfest ist und besonders bevorzugt sich das Granulier- und/oder Agglomerierwerkzeug um seine Schaftachse drehbar ist.

## Claims

1. Method for granulating or agglomerating, in which the ingredients to be granulated or to be agglomerated are introduced into a container and mixed with a tool, **characterised in that** a granulating and/or agglomerating device comprising a container and a granulating and/or agglomerating tool arranged in the container, wherein the granulating and/or agglomerating tool comprises a fastening shaft and a substantially disk-shaped element with a diameter d which is fastened thereto and has an upper surface, a lower surface and a circumferential surface connecting the upper and the lower surface, the circumferential surface exhibiting a plurality of essentially V-shaped grooves running parallel to the axis of the shaft.

2. Method according to claim 1, **characterised in that** the grooves exhibit a groove depth t, t being between 0.05 and 0.4 times, preferably between 0.1 and 0.3 times and best between 0.15 and 0.25 times the diameter d.

3. Method according to claim 1 or 2, **characterised in that** at least one groove wall at least in part is made of a harder material than the disk-shaped element.

4. Method according to one of claims 1 to 3, **characterised in that** provided in the groove wall of the disk-shaped element there is a recess into which a wearing element is fitted, the wearing element preferably being made of a harder material than the disk-shaped element.

5. Method according to claim 4, **characterised in that** the wearing element protrudes beyond the upper surface and/or the lower surface and/or the circumferential surface by a distance a, the distance a preferably being less than the thickness e of the disk-shaped element, the distance a by which the wearing element protrudes beyond the upper surface being equal or different to the distance a by which the wearing element protrudes beyond the lower surface and equal or different to the distance a by which the wearing element protrudes beyond the circumferential surface.

6. Method according to claim 5, **characterised in that** at least one groove wall exhibits at least two recesses which are separated from one another and into which in each case a wearing element is fitted, the wearing material preferably protruding beyond the upper surface and/or the lower surface in both portions.

7. Method according to one of claims 1 to 6, **characterised in that** the upper surface in a circular portion extending from the circumferential surface by at least the groove depth t in the direction of the shaft, exhibits no element extending axially beyond the groove walls or a wearing element fastened on or in the groove walls.

8. Method according to one of claims 1 to 7, **characterised in that** the lower surface exhibits at least one and preferably at least two swirl elements which protrude beyond the lower surface in the axial direction, the swirl elements preferably having the same angular spacing in the circumferential direction.

9. Method according to one of claims 1 to 8, **characterised in that** the grooves are arranged equidistant from one another in the circumferential direction, the ratio of the groove width to the distance between the grooves in the circumferential direction being preferably greater than 0.05, preferably between 0.1 and 5 and best between 0.3 and 2.

10. Method according to one of claims 1 to 9, **characterised in that** at least two disk-shaped elements are provided, spaced a distance from one another in the axial direction.

11. Method according to one of claims 1 to 10, **characterised in that** the axis of rotation of the container and the axis of the shaft are arranged parallel to one another, the axis of rotation of the container and the axis of the shaft being preferably spaced a distance from one another.

12. Method according to claim 11, **characterised in that** the container is rotatable, preferably the axis of the shaft of the granulating and/or agglomerating tool being fixed in one location and particularly preferably the granulating and/or agglomerating tool being rotatable about its shaft axis.

## Revendications

1. Procédé de granulation ou d'agglomération, dans lequel les composants à granuler ou à agglomérer sont placés dans un réservoir et mélangés avec un outil, **caractérisé en ce qu'**il est utilisé un dispositif de granulation et/ou d'agglomération avec un réservoir et un outil de granulation et/ou d'agglomération disposé dans le réservoir, l'outil de granulation et/ou d'agglomération ayant une tige de fixation et un élément fixé à celle-ci, à peu près en forme de disque avec un diamètre d, avec une face supérieure, une face inférieure et une face périphérique raccordant la face supérieure et la face inférieure, la face périphérique présentant une pluralité de rainures essentiellement en V parallèles à l'axe de tige.

2. Procédé selon la revendication 1, **caractérisé en ce que** les rainures présentent une profondeur de rainure t, t étant égale à entre 0,05 et 0,4 fois, de préférence entre 0,1 et 0,3 fois et encore mieux entre 0,15 et 0,25 fois le diamètre d.

3. Procédé selon la revendication 1 ou 2, **caractérisé en ce qu'**au moins une paroi de rainure est réalisée au moins par tronçons avec un matériau plus dur que l'élément en forme de disque.

4. Procédé selon l'une des revendications 1 à 3, **caractérisé en ce que**, dans la paroi de rainure de l'élément en forme de disque, il est prévu un creux dans lequel est introduit un élément d'usure, l'élément d'usure se composant de préférence d'un matériau plus dur que l'élément en forme de disque.

5. Procédé selon la revendication 4, **caractérisé en ce que** l'élément d'usure dépasse de la face supérieure et/ou de la face inférieure et/ou de la face périphérique sur une distance a, la distance a étant de préférence inférieure à l'épaisseur e de l'élément en forme de disque, la distance a sur laquelle l'élément d'usure dépasse de la face supérieure étant égale à, ou différente de la distance a sur laquelle l'élément d'usure dépasse de la face inférieure et égale à, ou différente de la distance a sur laquelle l'élément d'usure dépasse de la face périphérique.

6. Procédé selon la revendication 5, **caractérisé en ce qu'**au moins une paroi de rainure présente au moins deux creux séparés l'un de l'autre, dans lesquels respectivement un élément d'usure est introduit, le matériau d'usure dépassant de préférence de la face supérieure et/ou de la face inférieure dans le cas des deux tronçons.

7. Procédé selon l'une des revendications 1 à 6, **caractérisé en ce que**, dans un tronçon de forme circulaire qui s'étend de la face périphérique sur au moins la profondeur de rainure t en direction de la tige, la face supérieure ne présente pas d'élément s'étendant axialement sur les parois de rainure ou sur un élément d'usure fixé contre ou dans les parois de rainure.

8. Procédé selon l'une des revendications 1 à 7, **caractérisé en ce que** la face inférieure présente au moins un et de préférence au moins deux éléments de tourbillonnement qui dépassent de la face inférieure dans la direction axiale, les éléments de tourbillonnement ayant de préférence des distances angulaires égales dans la direction circonférentielle.

9. Procédé selon l'une des revendications 1 à 8, **caractérisé en ce que**, dans la direction circonférentielle, les rainures sont disposées de façon équidistante entre elles, le rapport de la largeur de rainure à la distance des rainures dans la direction circonférentielle étant de préférence supérieur à 0,05, de préférence compris entre 0,1 et 5 et encore mieux entre 0,3 et 2.

10. Procédé selon l'une des revendications 1 à 9, **caractérisé en ce qu'**il est prévu au moins deux éléments en forme de disque qui sont espacés l'un de l'autre dans la direction axiale.

11. Procédé selon l'une des revendications 1 à 10, **caractérisé en ce que** l'axe de rotation de réservoir et l'axe de tige sont disposés parallèlement l'un à l'autre, l'axe de rotation de réservoir et l'axe de tige étant de préférence espacés l'un de l'autre.

12. Procédé selon la revendication 11, **caractérisé en ce que** le réservoir est rotatif, l'axe de tige de l'outil de granulation et/ou d'agglomération étant de préférence stationnaire, et l'outil de granulation et/ou d'agglomération étant de façon particulièrement préférée rotatif autour de son axe de tige.
